# EUROPÄISCHE PATENTSCHRIFT

(11) **EP 1 541 277 B1**
(45) Veröffentlichungstag und Bekanntmachung des Hinweises auf die Patenterteilung: **22.11.2006**
(21) Anmeldenummer: 04029394.6
(22) Anmeldetag: 10.12.2004
(51) Int. Cl.: B23Q 3/18, B23Q 7/14, B65G 17/00, B65G 47/29

(54) **Positioniereinheit und Transportsystem mit Positioniereinrichtung**
means for positioning and transportsystem with means for positioning
Dispositif de positionnement et système de transport avec un dispositif de positionnement

(30) Priorität: 12.12.2003 DE 10358365
(43) Veröffentlichungstag der Anmeldung: 15.06.2005
(73) Patentinhaber: Bosch Rexroth Aktiengesellschaft, 70184 Stuttgart (DE)
(72) Erfinder: Leisner, Ernst, 71638 Ludwigsburg (DE); Willi, Marco, 70563 Stuttgart (DE); Büsing, Boris, 70376 Stuttgart (DE)
(74) Vertreter: Herzog, Markus

(56) Entgegenhaltungen:
- DE-A1- 4 111 498
- DE-A1- 10 045 743
- GB-A- 645 920

## Beschreibung

Die vorliegende Erfindung betrifft eine Positioniereinrichtung zur Positionierung eines in einer Transportrichtung längs eines Transportwegs auf einer Transportbahn bewegbaren Transportgutträgers in einer wenigstens bezüglich der Transportrichtung vorbestimmten Einspannposition, wobei die Positioniereinrichtung umfasst:
- ein Anschlagmittel,
- ein Bewegungsmittel, welches mit Abstand zum Anschlagmittel angeordnet oder anordenbar ist und zur Ausführung einer Positionierbewegung ausgebildet ist, sowie
- eine Bewegungsantriebsvorrichtung, welche das Bewegungsmittel zur Positionierbewegung antreibt,
wobei das Bewegungsmittel eine Positioniergeometrie aufweisen kann, welche durch die Positionierbewegung von einer Außereingriffsstellung in eine Positioniereingriffsstellung bringbar ist, in der die Positioniergeometrie mit einer Positioniergegengeometrie des Transportgutträgers derart in Eingriff ist, dass der Transportgutträger zwischen dem Bewegungsmittel und dem Anschlagmittel in der Einspannposition angeordnet ist.

Weiterhin betrifft die vorliegende Erfindung ein Transportsystem zur Bewegung von Transportgutträgern in einer Transportrichtung längs eines Transportwegs auf einer Transportbahn, das Transportsystem umfassend die Transportbahn welche eine Ausdehnung sowohl in der Transportrichtung als auch in einer zu dieser orthogonalen Transportbahnquerrichtung aufweist, ein mit dem Transportgutträger zur Bewegungsübertragung koppelbares Antriebsmittel, insbesondere wenigstens ein umlaufendes Antriebsmittel, vorzugsweise wenigstens eine umlaufende Kette oder/und wenigstens ein umlaufendes Band, welches Transportsystem eine Positioniereinrichtung mit den zuvor genannten Merkmalen umfasst.

Eine Positioniereinrichtung und ein Transportsystem der gattungsgemäßen Art sind aus der DE 100 45 743 A1 bekannt. Die bekannte Positioniereinheit mit Positioniergeometrie weist als Bewegungsantriebsvorrichtung einen mit Druck beaufschlagbaren Zylinder auf, in welchem ein Spannstift aus dem Zylinder ausfahrbar und in diesen einziehbar vorgesehen ist. Spannstift und Druckzylinder bilden ein Kolben-Zylinder-System.

Die aus der DE 100 45 743 A1 bekannte Positioniereinrichtung ist an einem Transportsystem derart angeordnet, dass in der Positioniereingriffsstellung des Spannstifts, welche einer aus dem Druckzylinder ausgefahrenen Stellung des Spannstifts entspricht, der Transportgutträger zwischen dem Anschlagmittel und dem Bewegungsmittel eingeklemmt und in der gewünschten Einspannposition angeordnet und gehalten ist.

Nachteilig an der bekannten Positioniereinrichtung bzw. an dem bekannten Transportsystem ist, dass der Spannstift durch Formschluss sowohl für eine genaue Anordnung des Transportgutträgers in der gewünschten Einspannposition sorgt, als auch die zum Halten des Transportgutträgers in dieser Einspannstellung benötigte Haltekraft aufbringt. Da der Transportgutträger in der Regel in der gewünschten Einspannposition angeordnet wird, um durch Bearbeitungs- oder/und Handhabungsgeräte Arbeits- oder/und Entnahme- oder/und Beladevorgänge an dem Transportgut bzw. an dem Transportgutträger auszuführen, kann die benötigte Haltekraft erhebliche Größenordnungen annehmen. Auf den in der Positioniereingriffsstellung aus dem Druckzylinder auskragenden Spannstift können daher Biegemomente in einer Größe wirken, welche auf Dauer die Positioniereinrichtung beschädigen und unbrauchbar machen. Die Unbrauchbarkeit kann in einer verschlechterten Bewegungsmöglichkeit des Spannstifts durch Verklemmen im Zylinder oder in einer ungenauen Positionierung aufgrund von Formabweichungen bestehen.

Aus der GB-A-645920 ist ein weiteres Transportsystem bekannt, welches eine Positioniereinrichtung aufweist, um ein auf einem Förderband transportiertes Transportgut in definierter Position zu halten. Dazu weist die bekannte Positioniereinrichtung eine Mehrzahl von Haltewalzen auf, welche am Ende eines hydraulisch betätigbaren Hebels angeordnet sind, um zwischen einer Nicht-Angriffsstellung und einer Spannangriffsstellung verschwenkbar zu sein.

Zur weiteren Illustration des Standes der Technik auf dem Gebiet von Positioniereinrichtungen und zugehörigen Transportsystemen kann ferner auf die DE-A-41 11 498 verwiesen werden, welche eine an Schienen in Transportrichtung bewegbare Positioniereinrichtung mit orthogonal zur Transportrichtung hydraulisch bewegbaren Positionierzapfen offenbart, wobei die Positionierzapfen zur Positionierung eines plattenförmigen Transportguts von außen in entsprechende Ausnehmungen in den Stirnseiten des Transportguts einführbar sind.

Es ist daher Aufgabe der vorliegenden Erfindung, eine Positioniereinrichtung und ein Transportsystem anzugeben, mit welchem ein Transportgutträger zuverlässig auch über lange Zeit genau in einer gewünschten Einspannposition positioniert werden kann.

Diese Aufgabe wird erfindungsgemäß bei einer Positioniereinrichtung der eingangs genannten Art dadurch gelöst, dass das Bewegungsmittel weiterhin eine gesondert von der Positioniergeometrie vorgesehene Einspannanordnung aufweist, welche durch die Bewegungsantriebsvorrichtung zu einer Einspannbewegung antreibbar ist, durch die die Einspannanordnung von einer Nicht-Angriffsstellung in eine Spannangriffsstellung bringbar ist, in welcher sie im Zusammenwirken mit dem Anschlagmittel eine Haltekraft auf den Transportgutträger ausübt, um diesen in der Einspannposition zu halten.

Bei der so ausgebildeten Positioniereinrichtung wird die Haltekraft zum Halten des Transportgutträgers in der Einspannposition von einer gesondert von der Positioniergeometrie vorgesehenen Einspannanordnung aufgebracht, sodass die Positioniergeometrie im Vergleich zur Positioniereinrichtung des Standes der Technik entlastet ist und geringere Kräfte auf sie einwirken. Die Standzeit der Positioniergeometrie bzw. des Bewegungsmittels ist dadurch erhöht.

Wenn in der vorliegenden Anmeldung gesagt ist, dass die gewünschte Einspannposition des Transportgutträgers wenigstens bezüglich der Transportrichtung vorbestimmt ist, so soll damit ausgesagt sein, dass der Transportgutträger in Transportrichtung mit möglichst großer Genauigkeit positioniert wird, während es unter Umständen auf die Positioniergenauigkeit in zwei zueinander und zur Transportrichtung orthogonalen Raumrichtungen nicht oder nicht so sehr ankommt. Bevorzugt ist jedoch, dass der Transportgutträger in der Einspannposition sowohl bezüglich der Transportrichtung als auch bezüglich einer zur Transportrichtung orthogonalen Transportbahnquerrichtung möglichst genau angeordnet ist. Besonders bevorzugt ist der Transportgutträger in der Einspannposition zusätzlich auch in einer zur Transportrichtung und zur Transportbahnquerrichtung orthogonalen Raumrichtung möglichst genau positioniert.

In der bezeichneten Außereingriffsstellung ist die Positioniergeometrie außer Eingriff mit der am Transportgutträger vorgesehenen Positioniergegengeometrie. Ebenso ist in der bezeichneten Nicht-Angriffsstellung die Einspannanordnung außer Eingriff mit dem Transportgutträger und greift nicht an diesem an.

Der Transportgutträger ist in Transportsystemen der eingangs genannten Art an ein in dem Transportsystem vorgesehenes Antriebsmittel angekoppelt oder ankoppelbar. Das Antriebsmittel ist in Transportrichtung bewegbar und nimmt den angekoppelten Transportgutträger in Transportrichtung mit.

Nun ist grundsätzlich denkbar, dass dann, wenn der Transportgutträger in der Einspannposition gehalten ist, auch das mit ihm gekoppelte Antriebsmittel zwangsweise angehalten ist. Jedoch ist in derartigen Transportsystemen eine möglichst hohe Flexibilität und damit verbunden eine individuelle Ansteuerung einzelner Transportgutträger gewünscht, welche sich gleichzeitig auf der Transportbahn befinden. Der Transportgutträger ist daher bevorzugt wahlweise mit dem Antriebsmittel koppelbar. Dabei kann die von der Einspannanordnung aufzubringende Haltekraft zum Halten des Transportgutträgers in der Einspannposition dadurch verringert sein, dass der Transportgutträger dann, wenn sich die Einspannanordnung in der Einspannposition befindet, von dem Antriebsmittel entkoppelt ist. Mit "entkoppelt" im Sinne dieser Anmeldung ist jeder Zustand bezeichnet, in welchem die zwischen Transportgutträger und Antriebsmittel wirkende Kopplungskraft durch Lageveränderung von Transportgutträger und Antriebsmittel zueinander verringert ist.

Beispielsweise kann der Transportgutträger auf dem in Transportrichtung bewegbaren Antriebsmittel aufliegen und durch reibschlüssige Kopplung in Transportrichtung bewegt werden, wobei der Transportgutträger dann zur Verringerung der reibschlüssigen Kopplungskraft von der Einspannanordnung durch die Einspannbewegung von dem Antriebsmittel abhebbar und in der Einspannposition schließlich abgehoben ist.

Aus der DE 100 45 743 A1 ist weiterhin bekannt, ein Anlageteil des Anschlagmittels in Transportrichtung verlagerbar auszuführen, um dadurch die von der Positioniergeometrie aufzubringende Kraft zur Anordnung des Transportgutträgers in der Einspannposition zu reduzieren. Auch ein Anlageteil des Anschlagmittels der vorliegenden Erfindung kann zur Erlangung dieses Vorteils derart verlagerbar ausgeführt sein. Vorzugsweise ist es gegen eine Federkraft parallel zur Transportrichtung verlagerbar, sodass eine definierte Ruhestellung erreicht werden kann.

Die Einspannanordnung, aber auch das Anlageteil, sollten zum einen ausreichend robust ausgeführt sein, um die benötigte Haltekraft auf den Transportgutträger ausüben zu können. Sie sollten darüber hinaus jedoch auch derart ausgeführt sein, dass sie den Transportgutträger in der Spannangriffsstellung nicht beschädigen. Dies kann beispielsweise dadurch erreicht werden, dass die Einspannanordnung und vorzugsweise auch das Anlageteil jeweils wenigstens ein Kunststoffteil, insbesondere aus Polyoxymethylen, aufweisen, welches zum Berührangriff an dem Transportgutträger vorgesehen ist.

Um in Bezug auf die Positioniergeometrie eine möglichst symmetrische Krafteinleitung der Einspannanordnung in den Transportgutträger erhalten zu können, ist es vorteilhaft, wenn die Einspannanordnung wenigstens zwei Angriffsstellen zum Berührangriff an dem Transportgutträger umfasst, von welchen in Transportrichtung wenigstens eine vor und wenigstens eine andere hinter der Positioniergeometrie vorgesehen ist.

Die hohe Positioniergenauigkeit kann über einen langen Zeitraum erhalten bleiben, wenn die Positioniergeometrie aus Metall gebildet ist. Dabei hat sich Schnellarbeitsstahl als ein Werkstoff erwiesen, welcher bei verhältnismäßig niedrigen Kosten eine ausreichend dauerhafte Festigkeit bereitstellt.

Um die Formgenauigkeit der Positioniergeometrie und damit die Anordnungsgenauigkeit des Transportgutträgers in der Einspannposition über eine lange Zeit gewährleisten zu können, kann die Positioniergeometrie zumindest abschnittsweise gehärtet sein, bevorzugt durch Aufkohlen der Randschichten oder durch eine Kohlenstoffbeschichtung.

Ein besonderer Vorteil kann dadurch erreicht werden, dass die Positioniereinrichtung derart ausgebildet ist, dass die Positionierbewegung zumindest abschnittsweise einer krummlinigen Trajektorie, insbesondere einer Teilkreisbahn, folgt. Durch den zumindest abschnittsweise krummlinigen Verlauf der bei der Positionierbewegung von der Positioniergeometrie beschriebenen Trajektorie können in einer einzigen Bewegung wenigstens zwei zueinander orthogonale Bewegungskomponenten der Positioniergeometrie erhalten werden, die unterschiedlichen Zwecken dienend gewählt sein können. So kann die eine Bewegungskomponente zum Positionieren des Transportgutträgers und die andere Bewegungskomponente zum Entkoppeln des Transportgutträgers von einem Antriebsmittel gewählt sein. Eine beliebige krummlinige Bahn kann etwa durch eine Nockenbahn vorgesehen sein, welche die Positioniergeometrie in ihrer Positionierbewegung führt. Der gleiche Vorteil einer zumindest abschnittsweise krummlinigen Bewegung kann unabhängig vom Vorhandensein einer Positioniergeometrie auch in entsprechender Weise für die Einspannbewegung der Einspannanordnung erreicht werden.

Die Ausführung der Positioniereinrichtung mit einer Positioniergeometrie oder/und einer Einspannanordnung zur Ausführung einer krummlinigen Positionierbewegung oder/und einer krummlinigen Einspannbewegung ist im Zusammenhang mit einer gattungsgemäßen Positioniereinrichtung dem nach vorteilhaft.

Eine Positioniereinrichtung mit nur einer Positioniergeometrie ohne Einspannanordnung kann etwa gewählt sein, wenn die benötigten Haltekräfte nicht groß sind. Eine nicht zum Gegenstand der Erfindung zählende Positioniereinrichtung mit nur einer Einspannanordnung ohne Positioniergeometrie kann gewählt sein, wenn es auf die Positioniergenauigkeit nicht so sehr ankommt, d.h. wenn die Einspannposition mit verhältnismäßig großen Toleranzen behaftet ist, oder der Transportgutträger durch Anhalten einer Antriebsvorrichtung oder durch eine gesonderte Vorrichtung, etwa einen Vereinzeler, ausreichend genau in der Einspannposition angeordnet werden kann. In allen übrigen Fällen können, wie oben beschrieben, eine Positioniergeometrie und eine Einspannanordnung vorgesehen sein.

Zur Erleichterung der Montage kann das Bewegungsmittel ein Trägerelement umfassen, an welchem die Positioniergeometrie oder/und die Einspannanordnung vorgesehen ist. Das Trägerelement kann, wie aus dem genannten Stand der Technik bekannt, linear beweglich sein.

Bevorzugt kann dann, wenn die Positioniereinrichtung das zuvor genannte Trägerelement umfasst, das Trägerelement aus Gründen der Einfachheit um eine Drehachse drehbar angeordnet oder anordenbar sein. Mit der Drehbarkeit des Trägerelements ist u.a. eine Umlenkwirkung verbunden, sodass ein Konstrukteur freier in der Wahl der Anordnung der Bewegungsantriebsvorrichtung ist.

Die Bewegungsantriebsvorrichtung treibt nicht nur die Positioniergeometrie zur Positionierbewegung, sondern auch die Einspannanordnung zur Einspannbewegung an. Dementsprechend sollte die Bewegungsantriebsvorrichtung derart gewählt sein, dass sie dann, wenn sich die Einspannanordnung in der Spannangriffsstellung befindet, zur Aufbringung der an der Spannangriffsstelle benötigten Haltekraft in der Lage ist. Die Bewegungsantriebsvorrichtung kann daher ein Kraftgerät sein, welches pneumatisch, hydraulisch, elektrisch, elektromagnetisch, mechanisch oder dergleichen zur Erzeugung einer Bewegung und zur Übertragung einer Kraft ausgebildet ist.

Dabei kann bei verhältnismäßig geringer Gesamtgröße des Trägerelements unter Ausnutzung der Hebelwirkung eine von einer Bewegungsantriebsvorrichtung vorgegebene Kraft auf den benötigten Wert an der Stelle des Spannangriffs zwischen Einspannanordnung und Transportgutträger vergrößert oder verkleinert werden. Die größte konstruktive Freiheit in der Übersetzung der Kraft besteht dabei dann, wenn das Trägerelement wippenartig ausgebildet ist, wobei die Positioniergeometrie auf einer Seite des Trägerelements bezüglich der Drehachse angeordnet ist und eine Kopplungsstelle der Bewegungsantriebsvorrichtung mit dem Trägerelement auf der jeweils anderen Seite des Trägerelements vorgesehen ist.

Die Positioniereinrichtung sollte an möglichst vielen unterschiedlichen Transportsystemen einsetzbar sein, was dadurch erleichtert werden kann, dass die Positioniereinrichtung ein Grundelement umfasst, an welchem das Trägerelement drehbar angeordnet ist. Es reicht dann aus, das Grundelement an dem jeweiligen Transportsystem vorzusehen. Somit wird vermieden, dass das Trägerelement jeweils unmittelbar am Transportsystem drehbar angebracht werden muss.

Gemäß einer vorteilhaften Weiterbildung ist an dem Grundelement auch die Bewegungsantriebsvorrichtung abgestützt, sodass diese nicht eigens an dem Transportsystem angebracht werden muss. Es reicht dann aus, lediglich das Grundelement mit Trägerelement und Bewegungsantriebsvorrichtung an dem Transportsystem vorzusehen. Das Grundelement kann dafür mit entsprechenden, gewünschtenfalls standardisierten Anbringungsausbildungen versehen sein.

Zur weiteren Vereinfachung der Montage können das Trägerelement, die Einspannanordnung oder/und die Positioniergeometrie, das Grundelement und die Bewegungsantriebsvorrichtung zu einer vormontierten oder vormontierbaren Baugruppe zusammengefasst sein.

Im Gegensatz zu dem kolbenartig ausgebildeten Spannstift des Standes der Technik können im vorliegenden Fall das Trägerelement, das Anschlagmittel und das Grundelement als Metallbiegeteile oder bei geringeren benötigten Haltekräften, auch als Kunststoffformteile ausgebildet sein. Es kommt dabei in äußerst vorteilhafter Weise nicht auf eine formgenaue Bearbeitung der genannten Elemente an, da die gewünschte Positioniergenauigkeit auch durch eine entsprechende Justierung dieser Elemente am Transportsystem erreichbar ist. Gemäß einer vorteilhaften Weiterbildung der vorliegenden Erfindung ist eine entsprechende Justierungsmöglichkeit an den jeweiligen Elementen vorgesehen. Der oben genannte Fall einer vormontierten oder vormontierbaren Baugruppe ist auch deswegen bevorzugt, da es hier ausreicht, eine solche Justierungsmöglichkeit nur an dem Grundelement vorzusehen, etwa in einfachster Form durch Vorsehen von Langlöchern, längs welchen das Grundelement stufenlos verlagerbar ist.

Die oben genannte Aufgabe wird auch durch ein Transportsystem der gattungsgemäßen Art mit einer oben beschriebenen Positioniereinrichtung gelöst, sodass um gesonderten unabhängigen Schutz für ein Transportsystem der eingangs genannten Art nachgesucht wird, welches eine Positioniereinrichtung der eingangs genannten Art umfasst, dessen Bewegungsmittel entsprechend der oben gegebenen Beschreibung eine gesondert von der Positioniergeometrie vorgesehene Einspannanordnung aufweist, welche durch die Bewegungsantriebsvorrichtung zu einer Einspannbewegung antreibbar ist. Gewünschtenfalls kann die Positioniereinrichtung des Transportsystems auch wenigstens ein weiteres der oben genannten Merkmale aufweisen.

Um einen Transportgutträger bei einem kontinuierlich bewegten Antriebsmittel anzuhalten, sodass die Positioniereinrichtung den angehaltenen Transportgutträger genau positionieren kann, kann das Transportsystem wenigstens eine Stoppeinrichtung umfassen, welche wahlweise zwischen einer Stoppstellung, in welcher sie eine Bewegung des Transportgutträgers in der Transportrichtung hemmt, und einer Durchlaufstellung verstellbar ist, in welcher sie eine Bewegung des Transportgutträgers in der Transportrichtung gestattet. Die Stoppeinrichtung kann bevorzugt durch einen an sich bekannten Vereinzeler realisiert sein.

Da es bei der Einspannposition auf eine genaue Positionierung wenigstens bezüglich der Transportrichtung ankommt, ist es vorteilhaft, wenn das Bewegungsmittel derart an der Transportbahn angeordnet ist, dass die Positionierbewegung eine im Wesentlichen in Transportbahnquerrichtung verlaufende Bewegungskomponente aufweist. Durch eine geeignet gewählte Positioniergeometrie, etwa einem Zentrierkonus, kann durch Einfahren in die entsprechende Positioniergegengeometrie, etwa eine konische Ausnehmung, am Transportgutträger mit einer im Wesentlichen in Transportbahnquerrichtung verlaufenden Bewegungskomponente eine genaue Positionierung in der Transportrichtung erreicht werden. Mit einem entsprechend hart ausgebildeten Anschlagmittel, etwa mit einem Anlageteil aus Polyoxymethylen, kann darüber hinaus durch die im Wesentlichen in Transportbahnquerrichtung verlaufende Bewegungskomponente auch eine genaue Positionierung in Transportbahnquerrichtung erreicht werden.

Grundsätzlich ist denkbar, das Anschlagmittel und das Bewegungsmittel beliebig am Transportweg anzuordnen. Jedoch kann dann gegebenenfalls eine Bewegung des Anschlagmittels oder/und des Bewegungsmittels in den Transportweg hinein bzw. aus diesem heraus erforderlich sein. Eine derartige Bewegung ist dann nicht nötig, wenn das Anschlagmittel und das Bewegungsmittel derart an der Transportbahn angeordnet sind, dass der Transportweg des Transgutträgers zwischen ihnen hindurch verläuft. Eine derartige Anordnung ist daher bevorzugt.

Genauer kann zur sicheren Vermeidung von Kollisionen das Bewegungsmittel an einem ersten Querendbereich der Transportbahn angeordnet sein, und das Anschlagmittel kann dem Bewegungsmittel in Transportbahnquerrichtung gegenüberliegend an einem dem ersten Querendbereich in Transportbahnquerrichtung gegenüberliegenden zweiten Querendbereich der Transportbahn angeordnet sein.

Ein Transportsystem der beschriebenen, erfindungsgemäßen Art gestattet eine besonders sichere Positionierung eines Transportgutträgers dann, wenn die Positioniereinrichtung eine oben beschriebene Positionsgeometrie oder/und eine oben beschriebene Einspannanordnung umfasst und derart ausgebildet und bezüglich der Transportbahn angeordnet oder anordenbar ist, dass die Positionierbewegung oder/und die Einspannbewegung eine Bewegungskomponente in Transportbahnquerrichtung und eine weitere Bewegungskomponente in einer Richtung orthogonal zur ersten Bewegungskomponente, insbesondere in einer Richtung einer Entkopplung des Transportgutträgers von dem Antriebsmittel, aufweist. Die weitere Bewegungskomponente kann dabei zur Festlegung des Transportgutträgers bezüglich einer zweiten Raumrichtung dienen. Bevorzugt wird die zweite Bewegungskomponente jedoch zur Entkopplung des Transgutträgers vom Antriebsmittel genutzt, um so die am Transportgutträger benötigten Haltekräfte und Positionierkräfte zu reduzieren und gegebenenfalls den Verschleiß zu verringern. Von diesem Transportsystem sind auch geradlinige Positionierbewegungen oder/und geradlinige Einspannbewegungen ausdrücklich umfasst. Diese geradlinigen Bewegungen verlaufen dann schräg zu einer Ebene, welche von der Transportrichtung und der Transportbahnquerrichtung aufgespannt wird.

Dieser Vorteil kann gemäß einer vorteilhaften Weiterbildung der Erfindung besonders im Falle einer Drehung des Trägerteils um die Drehachse genutzt werden: Die am Trägerteil vorgesehene Einspannanordnung beschreibt dann auf ihrer Einspannbewegung einen Teilkreisbogen. Zum Halten des Transportgutträgers in der Einspannposition und gleichzeitigen Entkoppeln desselben vom Antriebsmittel kann die Anordnung der Drehachse derart gewählt sein, dass die Einspannbewegung eine Bewegungskomponente in Transportbahnquerrichtung und eine weitere Bewegungskomponente in einer Richtung einer Entkopplung des Transportgutträgers von dem Antriebsmittel aufweist. Je nach Wahl der Lage und der Länge des Teilkreisbogens können die beiden Bewegungskomponenten gezielt voreingestellt werden.

Die vorliegende Erfindung wird im Folgenden anhand von Figuren näher beschrieben werden. Es stellt dar:
- Fig. 1: eine Querschnittsansicht einer Ausführungsform eines Transportsystems mit Kettenfördermittel und an der Transportbahn angebrachter Positioniereinheit, wobei ein vorhandener Transportgutträger nicht positioniert ist.
- Fig. 2: die Ansicht von Fig. 1 mit positioniertem Transportgutträger,
- Fig. 3: eine der Fig. 1 entsprechende Querschnittsansicht durch einer alternativen Ausführungsform der vorliegenden Erfindung.
- Fig. 4: eine perspektivische Explosionsansicht einer Baugruppe aus Grundelement, Trägerelement, Einspannanordnung, Positioniergeometrie und Bewegungsantriebsvorrichtung.

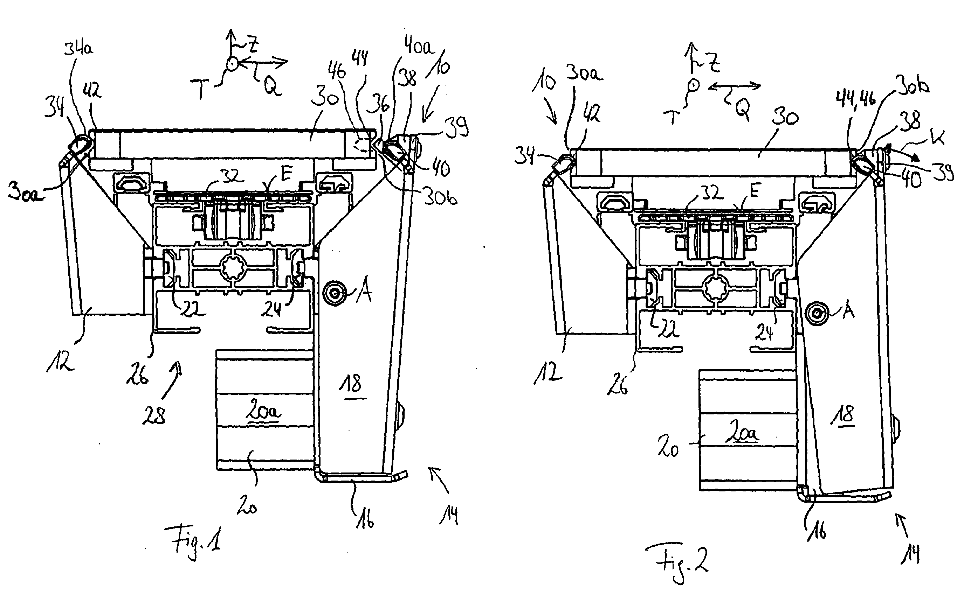

In den Fig. 1 bis 4 ist eine erfindungsgemäße Positioniervorrichtung allgemein mit 10 bezeichnet. Die Positioniervorrichtung 10 umfasst ein Anschlagmittel 12, sowie eine Baugruppe 14, umfassend ein Grundelement 16, ein daran drehbar festgelegtes Trägerelement 18 sowie eine an dem Grundelement 16 abgestützte Kolben-Zylinder-Einheit 20, deren Zylinder 20a am Grundelement 16 befestigt ist und deren beweglicher Kolben 20b zur Bewegungs- und Kraftübertragung mit dem Trägerelement 18 verbunden ist.

In Fig. 1 sind das Anschlagmittel 12 und die Baugruppe 14 über je einen T-förmigen Nutenstein 22 bzw. 24 in entsprechenden Nuten eines Profilelements 26 durch Festklemmen festgelegt. Das Profilelement 26 bildet eine Transportbahn 28, auf welcher ein Transportgutträger 30, etwa ein Werkstückträger, mittels einer endlos umlaufenden Kette 32 in Transportrichtung T bewegbar ist. Die Transportrichtung T verläuft in den Fig. 1 - 4 orthogonal zu den jeweiligen Zeichenebenen dieser Figuren.

Die Transportbahn 28 weist darüber hinaus eine Transportbahnquerrichtung Q auf, welche orthogonal zur Transportrichtung T derart verläuft, dass die Transportrichtung T und die Transportbahnquerrichtung Q gemeinsam eine Aufliegeebene E definieren, in welcher eine Unterseite des Transportgutträgers 30 auf einem Transporttrum der Transportkette 32 aufliegt und reibschlüssig von der Kette mitgeführt wird.

Das Anschlagmittel 12 weist zwei Anlageteile 34 aus Polyoxymethylen auf, von denen in den Fig. 1 - 4 nur das in Transportrichtung vordere zu sehen ist. Am Trägerteil ist eine Positioniergeometrie 36 vorgesehen, welche an einem Zapfen 38 ausgebildet ist, der austauschbar, etwa durch Schraubenbefestigung, an dem Trägerelement festgelegt ist. In Transportrichtung vor und hinter der Positioniergeometrie sind an dem Trägerelement 18 Einspannteile 40 angeordnet, welche wie die Anlageteile 34 aus Polyoxymethylen gefertigt sind. Aus Gründen der Reduzierung der Bauteilekomplexität, sind die Anlageteile 34 und die Einspannteile 40 identisch ausgebildet.

Am Transportgutträger 30 sind an den in Transportbahnquerrichtung Q weisenden Randbereichen 30a und 30b Ausnehmungen 42, 44 und 46 vorgesehen, wobei die Ausnehmung 42 an dem dem Anschlagmittel 12 zugeordneten Rand 30a des Transportgutträgers eine Angriffsausnehmung ist, in welche ein Angriffsabschnitt 34a des Anlageteils 34 eintaucht und zu einem formschlüssigen Berührangriff an den Transportgutträger kommt. Die Ausnehmungen 44 an dem der Baugruppe 14 (Bewegungsmittel) zugeordneten Rand 30b des Transportgutträgers sind ebenfalls Angriffsausnehmungen, in welche ein Angriffsabschnitt 40a der Einspannteile 40 eintaucht und zu einem formschlüssigen Berührangriff kommt. Lediglich strichliniert in Fig. 1 angedeutet und ansonsten nicht dargestellt, weil in den Darstellungen der Fig. 1 - 4 in Transportrichtung T hinter der Angriffsausnehmung 44 liegend, ist eine Positioniergegengeometrie 46 im Rand 30b des Transportgutträgers 30 ausgebildet, in welchen die Positioniergeometrie 36 eintaucht und in ihrer Positioniereingriffsstellung in formschlüssigen Positioniereingriff gelangt. Die Berührangriffe zwischen Transportgutträger 30 und Anlageteil 34 bzw. Einspannteil 40 können in einer weniger bevorzugten Ausführungsform reibschlüssig sein.

In Fig. 1 sind die Anlageteile 34 und Einspannteile 40 in ihrer Nicht-Angriffsstellung und die Positioniergeometrie 36 in ihrer Außereingriffstellung dargestellt.

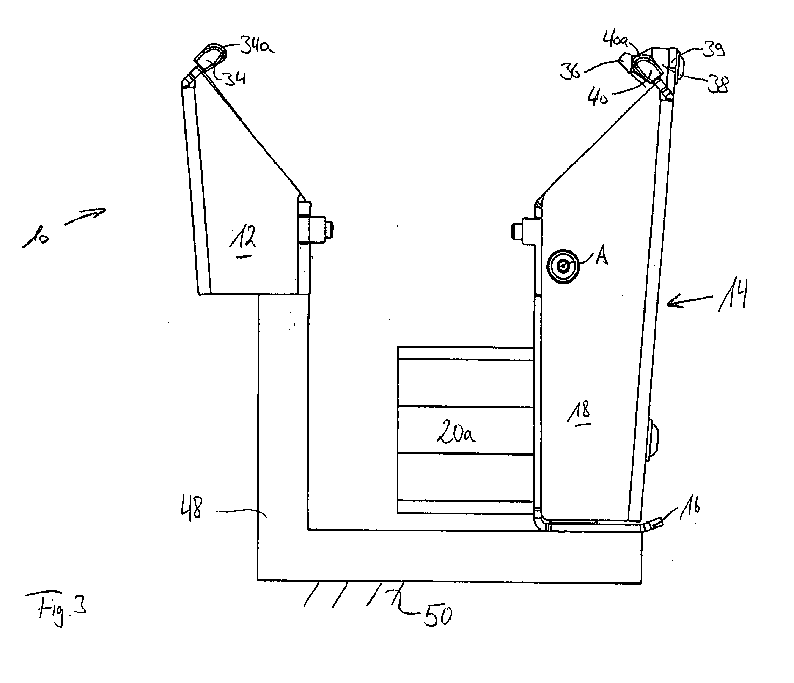

Fig. 2 stellt die gleiche Ansicht wie Fig. 1 dar, nur befinden sich nun die Anlageteile 34 und die Einspannteile 40 in ihrer Spannangriffsstellung am Transportgutträger 30 und die Positioniergeometrie 36 befindet sich in ihrer Positioniereingriffsstellung in der Positioniergegengeometrie 46. Diese Stellungsänderung ist bewirkt durch ein Ausschieben des Kolbens 20b aus dem Zylinder 20a. Dieses Ausschieben bewirkt wiederum eine Drehung des Trägerelements 18 um die Drehachse A am Grundelement 16 und somit eine gemeinsame Schwenkbewegung der Einspannteile 40 und der Positioniergeometrie 36. Die Anlageteile 34 und die Einspannteile 40 üben so eine Haltekraft auf den Tranportgutträger 30 aus, sodass die Positioniergeometrie entlastet ist und lediglich die zur Verlagerung des Transportgutträgers 30 in die Einspannposition benötigte Kraft auf diesen übertragen muss.

Wie in Fig. 2 bei K zu erkennen ist, ist die im Wesentlichen parallel zur Transportrichtung T verlaufende Drehachse A derart angeordnet, dass die Einspannteile 40 bei ihrer Bewegung von der Nicht-Angriffsstellung in die Spannangriffsstellung eine Bewegung sowohl in Bahnquerrichtung auf den Transportgutträger (30) zu, wie auch eine Bewegung in Abheberichtung Z des Transportgutträgers 30 von der Transportkette 32 ausführen. Zwar sind in der Regel die Konturen der Angriffsabschnitte 34a und 40a der Anlageteile 34 bzw. der Einspannteile 40 sowie die Konturen der Angriffsausnehmungen 42 und 44 derart gewählt, dass mit einem Eintauchen dieser Teile in die entsprechenden Abschnitte ein Abheben des Transportgutträgers 30 von der Transportkette 32 bewirkt wird, jedoch kann diese Abhebebewegung durch die Teilkreisbahn der Einspannteile 40 noch in vorteilhafter Weise unterstützt werden. Es wird noch einmal ausdrücklich darauf hingewiesen, das "Abheben" als Entkoppeln nicht notwendigerweise ein vollständiges Abheben des Transportgutträgers 30 von der Transportkette 32 bezeichnet, sodass ein Luftspalt zwischen diesen vorhanden ist. Vielmehr bezeichnet ein "Abheben" im Sinne dieser Anmeldung bereits eine Verringerung der vom Transportgutträger 30 auf die Transportkette 32 einwirkenden Gewichtskraft, sodass ein Durchrutschen der Transportkette 32 unter dem Transportgutträger 30 erleichtert ist. Dennoch ist ein vollständiges Abheben des Transportgutträgers 30 von der Transportkette 32 aus Verschleißgründen bevorzugt.

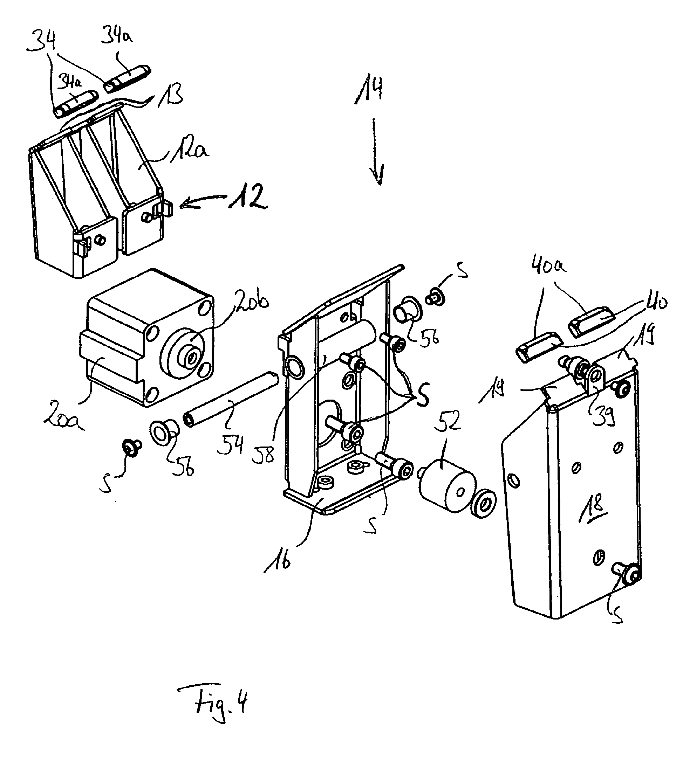

Die Fig. 3 zeigt die in Fig. 1 und 2 dargestellte Ausführungsform der Positioniereinrichtung, wobei ein Unterschied lediglich in der Anbringung des Anschlagmittels 12 und der Baugruppe 14 an feststehenden Teilen besteht. Im Gegensatz zu den Fig. 1 und 2 sind das Anschlagmittel 12 und die Baugruppe 14 in der Fig. 3 an einem Absteckwinkel 48 festgelegt, welcher wiederum fest an einem Fundament 50, etwa einem Maschinentisch befestigt ist.

Die Fig. 4 zeigt eine perspektivische Explosionsansicht der Positioniereinrichtung 10 der Fig. 1 - 3. Schrauben als Befestigungsmittel sind in Fig. 4. allgemein mit S bezeichnet. Es wird vom Fachmann verstanden werden, dass diese Schrauben durch andere Befestigungsmittel ersetzt werden können.

Wie in Fig. 4 gezeigt ist, umfasst das Anschlagmittel 12 ein Blechbiegeteil 12a. Weiterhin sind das Grundelement 16 und das Trägerelement 18 in einfacher und kostengünstiger Weise als Blechbiegeteile, gegebenenfalls unter Anschweißung von verstärkenden Hülsen oder Deckeln gebildet. Die Anlageteile 34 sowie die Einspannteile 40 sind dabei ebenso in einfacher und kostengünstiger Weise auf entsprechende an den Biegeteilen 12a und 18 ausgebildete Fortsätze 13 bzw. 19 aufgesteckt. Dagegen ist am Trägerelement 18 der Zapfen 38 mit der Positioniergeometrie 36 an einer am Trägerelement 18 gebildeten Lasche 39 festgeschraubt.

An dem Kolben 20b der Kolben-Zylinder-Einheit 20 ist ein Puffer 52 befestigt, welcher mit seinem freien Längsende dem Trägerelement 18 zur Kupplung mit diesem zugewandt ist. Dieser Puffer 52 ist vorzugsweise ein Gummi-Metall-Puffer, welcher als sogenannter "Megipuffer" erhältlich ist. Durch diesen Puffer können aufgrund der linearen Kolbenbewegung und der Schwenkbewegung des Trägerelements 18 an der Kopplungsstelle zwischen diesen auftretende Bewegungsinkonsistenzen ausgeglichen werden.

Die Drehachse A ist durch ein Rohrteil 54 mit längsendseitigen Abschlussstücken 56 realisiert, wobei das Rohrteil 54 in einer entsprechenden Lagerhülse 58 im Grundelement 16 zur Drehung um die Drehachse A aufgenommen ist.

In den Fig. 1 - 4 nicht dargestellt ist eine Justiermöglichkeit, mit deren Hilfe das Anschlagmittel 12 oder/und die Baugruppe 14 in ihrer Orientierung bezüglich einer Transportbahn an dieser fein justiert werden können.

## Patentansprüche

1. Positioniereinrichtung zur Positionierung eines in einer Transportrichtung (T) längs eines Transportwegs auf einer Transportbahn (28) bewegbaren Transportgutträgers (30) in einer wenigstens bezüglich der Transportrichtung (T) vorbestimmten Einspannposition, wobei die Positioniereinrichtung (10) umfasst:
- ein Anschlagmittel (12),
- ein Bewegungsmittel (18, 36, 40), welches mit Abstand zum Anschlagmittel (12) angeordnet oder anordenbar ist und zur Ausführung einer Positionierbewegung ausgebildet ist, sowie
- eine Bewegungsantriebsvorrichtung (20), welche das Bewegungsmittel zur Positionierbewegung antreibt,
wobei das Bewegungsmittel (18, 36, 40) eine Positioniergeometrie (36) aufweist, welche durch die Positionierbewegung von einer Außer-Eingriffsstellung in eine Positioniereingriffsstellung bringbar ist, in der die Positioniergeometrie (36) mit einer Positioniergegengeometrie (46) des Transportgutträgers (30) derart in Eingriff ist, dass der Transportgutträger (30) zwischen dem Bewegungsmittel (18, 36, 40) und dem Anschlagmittel (12) in der Einspannposition angeordnet ist,
**dadurch gekennzeichnet, dass** das Bewegungsmittel (18, 36, 40) weiterhin eine gesondert von der Positioniergeometrie (36) vorgesehene Einspannanordnung (40) aufweist, welche durch die Bewegungsantriebsvorrichtung (20) zu einer Einspannbewegung antreibbar ist, durch die die Einspannanordnung (40) von einer Nicht-Angriffsstellung in eine Spannangriffsstellung bringbar ist, in welcher sie im Zusammenwirken mit dem Anschlagmittel (12) eine Haltekraft auf den Transportgutträger (30) ausübt, um diesen in der Einspannposition zu halten.

2. Positioniereinrichtung nach Anspruch 1, wobei der Transportgutträger (30) zum Transport wahlweise mit einem in Transportrichtung (T) bewegbaren Antriebsmittel (32) koppelbar ist,
**dadurch gekennzeichnet, dass** der Transportgutträger (30) dann, wenn sich die Einspannanordnung (40) in der Einspannposition befindet, von dem Antriebsmittel (32) entkoppelt ist.

3. Positioniereinrichtung nach Anspruch 2, wobei der Transportgutträger (30) auf dem in Transportrichtung (T) bewegbaren Antriebsmittel (32) aufliegt,
**dadurch gekennzeichnet, dass** der Transportgutträger (30) von der Einspannanordnung (40) durch die Einspannbewegung von dem Antriebsmittel (32) abhebbar ist.

4. Positioniereinrichtung nach einem der vorhergehenden Ansprüche,
**dadurch gekennzeichnet, dass** das Anschlagmittel (12) ein zum Anlageeingriff mit dem Transportgutträger (30) ausgebildetes Anlageteil (34) aufweist.

5. Positioniereinrichtung nach einem der vorhergehenden Ansprüche,
**dadurch gekennzeichnet, dass** das die Einspannanordnung (40) und vorzugsweise auch das Anlageteil (30) jeweils wenigstens ein Kunststoffteil (34, 40), insbesondere aus Polyoxymethylen, aufweisen, welches zum Berührangriff an dem Transportgutträger (30) vorgesehen ist.

6. Positioniereinrichtung nach einem der vorhergehenden Ansprüche,
**dadurch gekennzeichnet, dass** die Einspannanordnung (40) wenigstens zwei Angriffsstellen zum Berührangriff an dem Transportgutträger (30) umfasst, von welchen in Transportrichtung (T) wenigstens eine vor und wenigstens eine andere hinter der Positioniergeometrie (36) vorgesehen ist.

7. Positioniereinrichtung nach einem der vorhergehenden Ansprüche,
**dadurch gekennzeichnet, dass** die Positioniergeometrie (36) aus Metall, bevorzugt aus Schnellarbeitsstahl ausgebildet ist.

8. Positioniereinrichtung nach einem der Vorhergehenden Ansprüche,
**dadurch gekennzeichnet, dass** sie derart ausgebildet ist, dass die Positionierbewegung oder/und die Einspannbewegung zumindest abschnittsweise einer krummlinigen Trajektorie, insbesondere einer Teilkreisbahn, folgt.

9. Positioniereinrichtung nach einem der Vorhergehenden Ansprüche,
**dadurch gekennzeichnet, dass** das Bewegungsmittel (18, 36, 40) ein Trägerelement (18) umfasst, an welchem die Positioniergeometrie (36) oder/und die Einspannanordnung (40) vorgesehen ist.

10. Positioniereinrichtung nach Anspruch 9,
**dadurch gekennzeichnet, dass** das Trägerelement (18) um eine Drehachse (A) drehbar angeordnet ist.

11. Positioniereinrichtung nach Anspruch 10,
**dadurch gekennzeichnet, dass** das Trägerelement (18) wippenartig ausgebildet ist, wobei die Positioniergeometrie (36) auf einer Seite des Trägerelements (18) bezüglich der Drehachse (A) angeordnet ist und eine Kopplungsstelle der Bewegungsantriebsvorrichtung (20) mit dem Trägerelement (18) auf der jeweils anderen Seite des Trägerelements (18) vorgesehen ist.

12. Positioniereinrichtung nach einem der Ansprüche 10 oder 11,
**dadurch gekennzeichnet, dass** sie ein Grundelement (16) umfasst, an welchem das Trägerelement (18) drehbar angeordnet ist.

13. Positioniereinrichtung nach Anspruch 12,
**dadurch gekennzeichnet, dass** das an dem Grundelement (16) die Bewegungsantriebsvorrichtung (20) abgestützt ist.

14. Positioniereinrichtung nach einen der Ansprüche 9 bis 13,
**dadurch gekennzeichnet, dass** sie eine vormontierte oder vormontierbare Baugruppe (14) aufweist, welche das Trägerelement (18), die Einspannanordnung (40), die Positioniergeometrie (36), das Grundelement (16) und die Bewegungsantriebsvorrichtung (20)umfasst.

15. Transportsystem zur Bewegung von Transportgutträgern (30) in einer Transportrichtung (T) längs eines Transportwegs auf einer Transportbahn (28), das Transportsystem umfassend die Transportbahn (28), welche eine Ausdehnung sowohl in der Transportrichtung (T) als auch in einer zu dieser orthogonalen Transportbahnquerrichtung (Q) auf weist, ein mit dem Transportgutträger (30) zur Bewegungsübertragung koppelbares Antriebsmittel (32), insbesondere wenigstens ein umlaufendes Antriebsmittel (32), vorzugsweise wenigstens eine umlaufende Kette (32) oder/und wenigstens ein umlaufendes Band, das System ferner umfassend eine Positioniereinrichtung (10) nach einem der vorhergehenden Ansprüche.

16. Transportsystem nach Anspruch 15,
**dadurch gekennzeichnet, dass** es wenigstens eine Stoppeinrichtung, insbesondere einen Vereinzeler, umfasst, welcher wahlweise zwischen einer Stoppstellung, in welche sie eine Bewegung des Transportgutträgers (30) in der Transportrichtung (T) hemmt, und einer Durchlassstellung verstellbar ist, in welcher sie eine Bewegung des Transportgutträgers (30) in der Transportrichtung (T) gestattet.

17. Transportsystem nach Anspruch 15 oder 16,
**dadurch gekennzeichnet, dass** das Bewegungsmittel (18, 36, 40) derart an der Transportbahn (28) angeordnet ist, dass die Positionierbewegung eine im Wesentlichen in Transportbahnquerrichtung (Q) verlaufende Bewegungskomponente aufweist.

18. Transportsystem nach einem der Ansprüche 15 bis 17,
**dadurch gekennzeichnet, dass** das Anschlagmittel (12) und das Bewegungsmittel (18, 36, 40) derart an der Transportbahn (28) angeordnet sind, dass der Transportweg zwischen ihnen hindurch verläuft.

19. Transportsystem nach einem der Ansprüche 15 bis 18.
**dadurch gekennzeichnet, dass** das Bewegungsmittel (18, 36, 40) an einem ersten Querendbereich der Transportbahn (28) angeordnet ist und das Anschlagmittel (12) dem Bewegungsmittel (18, 36, 40) in Transportbahnquerrichtung (Q) gegenüberliegend an einem dem ersten Querendbereich in Transportbahnquerrichtung (Q) gegenüberliegenden zweiten Querendbereich der Transportbahn (28) angeordnet ist.

20. Transportsystem nach einem der Ansprüche 15 bis 19,
**dadurch gekennzeichnet, dass** die Positioniereinrichtung (10) derart bezüglich der Transportbahn (28) angeordnet oder anordenbar ist, dass die Positionierbewegung oder/und die Einspannbewegung eine Bewegungskomponente in Transportbahnquerrichtung (Q) und eine weitere Bewegungskomponente orthogonal zur ersten Bewegungskomponente, insbesondere in einer Richtung (Z) einer Entkopplung des Transportgutträgers (30) von dem Antriebsmittel (32), aufweist.

## Claims

1. Positioning device for positioning a conveyed goods carrier (30), moveable on a conveyor track (28) along a transport path in a transport direction (T), in at least one predetermined clamped position relative to the transport direction (T), the positioning device (10) comprising:
- a stop means (12),
- a movement means (18, 36, 40), which is arranged or capable of arrangement at a distance from the stop means (12) and is designed to perform a positioning movement,
- a movement drive device (20) which drives the movement means to perform the positioning movement,
the movement means (18, 36, 40) having a geometric positioning element (36), which through the positioning movement can be moved from a disengaged position into a positioning engagement position, in which the geometric positioning element (36) is engaged with a geometric positioning counter-element (46) of the conveyed goods carrier (30) in such a way that the conveyed goods carrier (30) is arranged between the movement means (18, 36, 40) and the stop means (12) in the clamped position, **characterized in that** the movement means (18, 36, 40) furthermore has a clamping arrangement (40), which is provided separately from the geometric positioning element (36) and which can be driven by the movement drive device (20) to perform a clamping movement, by which the clamping arrangement (40) is brought from a disengaged position into a clamping engagement position in which, through interaction with the stop means (12), it exerts a holding force on the conveyed goods carrier (30), in order to hold said carrier in the clamped position.

2. Positioning device according to Claim 1, it being possible, for transporting it, to couple the conveyed goods carrier (30) selectively to a drive means (32) moveable in the transport direction (T), **characterized in that** the conveyed goods carrier (30) is decoupled from the drive means (32) when the clamping arrangement (40) is in the clamping position.

3. Positioning device according to Claim 2, the conveyed goods carrier (30) resting on the drive means (32) moveable in the transport direction (T), **characterized in that** the conveyed goods carrier (30) can be lifted off from the drive means (32) by the clamping movement of the clamping arrangement (40).

4. Positioning device according to any one of the preceding claims, **characterized in that** the stop means (12) has a bearing part (34) designed for bearing engagement with the conveyed goods carrier (30).

5. Positioning device according to any one of the preceding claims, **characterized in that** the clamping arrangement (40) and preferably also the bearing part (30) each have at least one plastic part (34, 40), composed in particular of polyoxymethylene, which is intended to come into applied contact with the conveyed goods carrier (30).

6. Positioning device according to any one of the preceding claims, **characterized in that** the clamping arrangement (40) comprises at least two engagement positions for applied contact with the conveyed goods carrier (30), of which at least one position is provided in front of the geometric positioning element (36) and at least one other is provided behind said element with respect to the transport direction (T).

7. Positioning device according to any one of the preceding claims, **characterized in that** the geometric positioning element (36) is made of metal, preferably of high-speed steel.

8. Positioning device according to any one of the preceding claims, **characterized in that** the positioning movement and/or the clamping movement, at least over some sections, describes a curvilinear trajectory, in particular a circular arc-shaped path.

9. Positioning device according to any one of the preceding claims, **characterized in that** the movement means (18, 36, 40) comprises a carrier element (18), on which the geometric positioning element (36) and/or the clamping arrangement (40) are mounted.

10. Positioning device according to Claim 9, **characterized in that** the carrier element (18) is pivotable about an axis of rotation (A).

11. Positioning device according to Claim 10, **characterized in that** the carrier element (18) is of rocker-shaped design, the geometric positioning element (36) being arranged on one side of the carrier element (18) relative to the axis of rotation (A) and a coupling position of the movement drive device (20) with the carrier element (18) being provided on the other side of the carrier element (18).

12. Positioning device according to either of Claims 10 or 11, **characterized in that** it comprises a base element (16), on which the carrier element (18) is rotatably mounted.

13. Positioning device according to Claim 12, **characterized in that** the movement drive device (20) is supported on the base element (16).

14. Positioning device according to any one of Claims 9 to 13, **characterized in that** it has a subassembly (14), which is or which can be preassembled and which comprises the carrier element (18), the clamping arrangement (40), the geometric positioning element (36), the base element (16) and the movement drive device (20).

15. Conveyor system for moving conveyed goods carriers (30) in a transport direction (T) along a transport path on a conveyor track (28), the conveyor system comprising the conveyor track (28), which extends both in the transport direction (T) and in a conveyor track transverse direction (Q) at right angles to that direction, a drive means (32) that can be coupled to the conveyed goods carrier (30) for transmitting motion, in particular at least one endless circulating drive means (32), preferably at least one endless circulating chain (32) and/or at least one endless, circulating belt, the system further comprising a positioning device (10) according to any one of the preceding claims.

16. Conveyor system according to Claim 15, **characterized in that** it comprises at least one stop device, in particular an isolating device, which is selectively adjustable between a stop position, in which it prevents a movement of the conveyed goods carrier (30) in the transport direction (T), and a passage position, in which it permits a movement of the conveyed goods carrier (30) in the transport direction (T).

17. Conveyor system according to Claim 15 or 16, **characterized in that** the movement means (18, 36, 40) is arranged on the conveyor track (28) in such a way that the positioning movement has a component motion running substantially in a conveyor track transverse direction (Q).

18. Conveyor system according to any one of Claims 15 to 17, **characterized in that** the stop means (12) and the movement means (18, 36, 40) are arranged on the conveyor track (28) in such a way that the transport path runs between them.

19. Conveyor system according to any one of Claims 15 to 18, **characterized in that** the movement means (18, 36, 40) is arranged on a first transverse end area of the conveyor track (28) and the stop means (12) is arranged opposite the movement means (18, 36, 40) in the conveyor track transverse direction (Q) on a second transverse end area of the conveyor track (28) opposite the first transverse end area in the conveyor path transverse direction (Q).

20. Conveyor system according to any one of Claims 15 to 19, **characterized in that** the positioning device (10) is or can be arranged relative to the conveyor track (28) in such a way that positioning movement and/or the clamping movement has a component motion in the conveyor track transverse direction (Q) and a further component motion at right angles to the first component motion, in particular in a direction (Z) for decoupling the conveyed goods carrier (30) from the drive means (32).

## Revendications

1. Dispositif de positionnement pour positionner un support de produits à transporter (30) mobile dans une direction de transport (T) le long d'un parcours de transport sur une voie de transport (28), dans une position de serrage prédéfinie au moins par rapport à la direction de transport (T), le dispositif de positionnement (10) comprenant :
- un moyen de butée (12),
- un moyen de déplacement (18, 36, 40), qui est disposé ou peut être disposé à distance du moyen de butée (12) et qui est conçu pour effectuer un mouvement de positionnement, ainsi que
- un dispositif d'entraînement en mouvement (20), qui entraîne le moyen de déplacement dans un mouvement de positionnement,
le moyen de déplacement (18, 36, 40) présentant une géométrie de positionnement (36) qui par le mouvement de positionnement peut être amenée une position sans engrènement dans une position d'engrènement en positionnement, dans laquelle la géométrie de positionnement (36) est engrenée dans une contre-géométrie de positionnement (46) du support de produits à transporter (30) de façon telle que le support de produits à transporter (30) soit disposé entre le moyen de déplacement (18, 36, 40) et le moyen de butée (12) dans la position de serrage,
**caractérisé en ce que** le moyen de déplacement (18, 36, 40) comporte toujours un agencement de serrage (40) prévu à part de la géométrie de positionnement (36) qui peut être entraîné par le dispositif d'entraînement en mouvement (20) dans un mouvement de serrage, permettant d'amener le dispositif de serrage (40) d'une position de dégagement dans une position d'engagement en serrage, dans laquelle en coopération avec le moyen de butée (12), il exerce une force de retenue sur le support de produits à transporter (30) pour maintenir ce dernier en position de serrage.

2. Dispositif de positionnement selon la revendication 1, le support de produits à transporter (30) pouvant être couplé facultativement pour le transport avec un moyen d'entraînement (32) mobile dans la direction de transport (T),
**caractérisé en ce que** le support de produits à transporter (30) est découplé du moyen d'entraînement (32) lorsque l'agencement de serrage (40) se trouve dans la position de serrage.

3. Dispositif de positionnement selon la revendication 2, le support de produits à transporter (30) s'appuyant sur le moyen entraînement (32) mobile en direction de transport (T),
**caractérisé en ce que** le support de produits à transporter (30) peut être soulevé de l'agencement de serrage (40) par le mouvement de serrage du moyen d'entraînement (32).

4. Dispositif de positionnement selon l'une quelconque des revendications précédentes,
**caractérisé en ce que** le moyen de butée (12) comporte un élément d'appui (34) conçu pour s'engager par appui sur le support de produits à transporter (30).

5. Dispositif de positionnement selon l'une quelconque des revendications précédentes,
**caractérisé en ce que** l'agencement de serrage (40) et de préférence également l'élément d'appui (34) comportent chacun au moins un élément en matière synthétique (34, 40), notamment en polyoxyméthylène, qui est prévu pour l'engagement par contact sur le support de produits à transporter (30).

6. Dispositif de positionnement selon l'une quelconque des revendications précédentes,
**caractérisé en ce que** l'agencement de serrage (40) comprend au moins deux points d'engagement, pour l'engagement par contact sur le support de produits à transporter (30) dont au moins l'un est prévu à l'avant et au moins un autre est prévu à l'arrière de la géométrie de positionnement (36) dans la direction de transport (T).

7. Dispositif de positionnement selon l'une quelconque des revendications précédentes,
**caractérisé en ce que** la géométrie de positionnement (36) est conçue en métal, de préférence en métal à coupe rapide.

8. Dispositif de positionnement selon l'une quelconque des revendications précédentes,
**caractérisé en ce qu'**il est conçu de façon telle que le mouvement de positionnement et/ou le mouvement de serrage suite au moins par section une trajectoire curviligne, notamment d'une voie en portion de cercle primitif.

9. Dispositif de positionnement selon l'une quelconque des revendications précédentes,
**caractérisé en ce que** le moyen de déplacement (18, 36, 40) comprend un élément support (18) sur lequel est prévue la géométrie de positionnement (36) et/ou l'agencement de serrage (40).

10. Dispositif de positionnement selon la revendication 9,
**caractérisé en ce que** l'élément support (18) est disposé de façon rotative autour d'un axe de rotation (A).

11. Dispositif de positionnement selon la revendication 10,
**caractérisé en ce que** l'élément support (18) est conçu à la façon d'une bascule, la géométrie de positionnement (36) étant disposée d'un côté de l'élément support (18) par rapport à l'axe de rotation (A) et un point de couplage du dispositif d'entraînement en mouvement (20) avec l'élément support (18) étant prévu sur l'autre côté respectif de l'élément support (18).

12. Dispositif de positionnement selon l'une quelconque des revendications 10 ou 11,
**caractérisé en ce qu'**il comprend un élément de base (16) sur lequel l'élément support (18) est disposé de façon rotative.

13. Dispositif de positionnement selon la revendication 12,
**caractérisé en ce que** le dispositif d'entraînement en mouvement (20) s'appuie sur l'élément de base (16).

14. Dispositif de positionnement selon l'une quelconque des revendications 9 à 13,
**caractérisé en ce qu'**il comporte un module (14) préalablement monté ou pouvant être préalablement monté, qui comprend l'élément support (18), l'agencement de serrage (40), la géométrie de positionnement (36), l'élément de base (16) et le dispositif d'entraînement en mouvement (20).

15. Système de transport pour le déplacement de supports de produits à transporter (30) dans une direction de déplacement (T) le long d'un parcours de transport sur une voie de transport (28), le système de transport comprenant la voie de transport (28), qui présente une extension aussi bien dans la direction de transport (T) que dans une direction transversale à la voie de transport (Q) qui est orthogonale par rapport à cette dernière, un moyen d'entraînement (32) pouvant être couplé avec le support de produits à transporter (30) pour la transmission du mouvement, notamment au moins un moyen d'entraînement en révolution (32), de préférence au moins une chaîne en révolution (32) et/ou au moins une bande en révolution, le système comprenant par ailleurs un dispositif de positionnement (10) selon l'une quelconque des revendications précédentes.

16. Système de transport selon la revendication 15,
**caractérisé en ce qu'**il comporte au moins un dispositif d'arrêt, notamment un séparateur qui peut être réglé au choix entre une position d'arrêt dans laquelle il inhibe un mouvement du support de produits à transporter (30) dans la direction de transport (T) et une position de passage, dans lequel il autorise un mouvement du support de produits à transporter (30).

17. Système de transport selon la revendication 15 ou 16,
**caractérisé en ce que** le moyen de déplacement (18, 36, 40) est disposé sur la voie de transport (28) de façon telle que le mouvement de positionnement présente une composante de mouvement s'étendant sensiblement dans la direction transversale à la voie de transport (Q).

18. Système de transport selon la revendication 15 à 17,
**caractérisé en ce que** le moyen de butée (12) et le moyen de déplacement (18, 36, 40) sont disposés sur la voie de transport (28) de façon à ce que le parcours de transport passe entre eux.

19. Système de transport selon l'une quelconque des revendications 15 à 18,
**caractérisé en ce que** le moyen de déplacement (18, 36, 40) est disposé sur une première zone d'extrémité transversale de la voie de transport (28) et **en ce que** le moyen de butée (12) est disposé à l'opposée du moyen de déplacement (18, 36, 40) dans la direction transversale à la voie de transport (Q) sur une deuxième zone d'extrémité transversale de la bande de transport (28) qui est opposée à la première zone d'extrémité transversale dans la direction transversale à la voie de transport (Q).

20. Système de transport selon l'une quelconque des revendications 15 à 19,
**caractérisé en ce que** le dispositif de positionnement (10) est disposé ou peut être disposé par rapport à la voie de transport (28) de façon telle, que le mouvement de positionnement ou/et le mouvement de serrage présente une composante de mouvement dans la direction transversale à la voie de transport (Q) et une autre composante de mouvement orthogonale par rapport à la première composante de mouvement, notamment dans une direction (Z) d'un découplage entre le support de produits à transporter (30) et le moyen d'entraînement (32).
